# FASCICULE DE BREVET EUROPEEN

(11) **EP 2 840 948 B1**
(45) Date de publication et mention de la délivrance du brevet: **06.07.2016**
(21) Numéro de dépôt: 13723860.6
(22) Date de dépôt: 23.04.2013
(51) Int. Cl.: A47J 43/07

(54) **SUPPORT DE RANGEMENT POUR OUTILS AMOVIBLES DE DECOUPE D'ALIMENTS**
LAGERUNGSUNTERSTÜTZUNG FÜR ABNEHMBARE LEBENSMITTELSCHNEIDEWERKZEUGE
STORAGE SUPPORT FOR DETACHABLE FOOD-CUTTING TOOLS

(30) Priorité: 26.04.2012 FR 1253885
(43) Date de publication de la demande: 04.03.2015
(73) Titulaire: SEB S.A., 69130 Ecully (FR)
(72) Inventeur: SENECHAL, Tony, F-65100 Lourdes (FR); BORDES, Jean-Luc, F-65100 Ade (FR); BULEON, Yannick, F-65600 Semeac (FR)
(74) Mandataire: Cémeli, Eric Philippe Laurent
(86) Numéro de dépôt international: PCT/FR2013/050904
(87) Numéro de publication internationale: WO 2013/160610

(56) Documents cités:
- FR-A1- 2 364 013
- US-A1- 2007 051 249
- US-A1- 2010 154 660

## Description

La présente invention concerne le domaine technique des appareils électroménagers de préparation culinaire à outils interchangeables prévus pour découper les aliments, notamment en tranches, en lamelles ou en copeaux.

La présente invention concerne plus particulièrement un dispositif de découpe d'aliments prévu pour entraîner en rotation au moins un accessoire rotatif de découpe d'aliments, notamment pour trancher et/ou râper et/ou émincer les aliments.

La présente invention concerne notamment, mais non exclusivement, un support de rangement prévu pour le montage d'outils amovibles d'accessoire rotatif de découpe d'aliments, un ensemble comportant un support de rangement et des outils amovibles d'accessoire rotatif de découpe d'aliments, ainsi qu'un dispositif de découpe d'aliments prévu pour entraîner en rotation au moins un accessoire rotatif de découpe d'aliments de type disque.

Il est connu des documents WO 98/11810, WO 2002/015761 ou CN 2 686 502 de réaliser des supports de rangement pour outils amovibles de découpe d'aliments prévus pour être montés sur un support rotatif de travail présentant un organe d'entraînement. Le support rotatif de travail recevant l'un des outils amovibles de découpe d'aliments présente une forme de disque, la surface de l'outil amovible de découpe d'aliment se situant dans le prolongement de la surface du support rotatif de travail. Toutefois les outils amovibles de découpe d'aliments sont disposés sur la tranche dans des ouvertures des supports de rangement. De ce fait, les supports de rangement portant les outils amovibles de découpe d'aliments sont assez volumineux, même s'ils peuvent être rangés dans l'enceinte de travail du dispositif de découpe. Un inconvénient de ces réalisations réside dans le fait que le volume de l'enceinte de travail doit être important pour pouvoir loger le support de rangement portant les outils amovibles de découpe d'aliments.

Un objet de la présente invention est de proposer un support de rangement prévu pour porter au moins deux outils amovibles de découpe d'aliments, qui présente un encombrement réduit.

Un autre objet de la présente invention est de proposer un ensemble comportant un support de rangement et au moins deux outils amovibles de découpe d'aliments, qui présente un encombrement réduit.

Un objet de la présente invention est de proposer un dispositif de découpe d'aliments prévu pour entraîner en rotation au moins un accessoire rotatif de découpe d'aliments, qui présente une construction compacte permettant de recevoir un support de rangement.

Ces objets sont atteints avec un support de rangement d'outils amovibles d'accessoire rotatif de découpe d'aliments, comportant un noyau central et une zone de réception prévue pour le montage d'un outil amovible d'accessoire rotatif de découpe d'aliments, du fait que la zone de réception s'étend autour du noyau central selon un angle présentant une ouverture axiale inférieure à 180°, et que le support de rangement comporte au moins une autre zone de réception prévue pour le montage d'un autre outil amovible d'accessoire rotatif de découpe d'aliments, la ou chaque autre zone de réception s'étendant autour du noyau central selon un angle présentant une ouverture axiale inférieure à 180°. Les outils amovibles d'accessoire rotatif de découpe d'aliments peuvent ainsi être montés de part et d'autre du noyau central en limitant l'encombrement dans la direction s'étendant entre lesdits outils amovibles.

Avantageusement alors, le noyau central présente un logement axial. Cette disposition permet d'utiliser le noyau central pour l'accrochage du support de rangement sur un dispositif de découpe d'aliments, en limitant son encombrement. Cette disposition permet également d'envisager la mise en place du support de rangement sur un organe d'entraînement d'un dispositif de découpe d'aliments.

Avantageusement alors, un organe d'accrochage est agencé dans le logement axial. Cette disposition permet de réduire la hauteur du noyau central et favorise encore davantage l'obtention d'un encombrement réduit.

Avantageusement encore, le logement axial forme un passage traversant. Cette disposition permet de faciliter le montage du support de rangement dans l'enceinte de travail d'un dispositif de découpe d'aliments.

Selon une forme de réalisation avantageuse, le support de rangement présente une structure en forme de disque comportant une couronne périphérique reliée au noyau central. Une telle disposition présente un encombrement particulièrement réduit.

Avantageusement alors, la couronne périphérique est reliée au noyau central par au moins deux bras, la zone de réception et la ou chaque autre zone de réception étant chacune délimitées par deux des bras adjacents. Cette disposition permet d'obtenir une structure légère et résistante.

Avantageusement alors, les bras sont régulièrement espacés autour du noyau central. Cette disposition permet de faciliter le rangement d'outils amovibles interchangeables.

Avantageusement alors, le support de rangement comporte entre deux et six bras, et de préférence trois ou quatre bras.

Ces objets sont atteints également avec un ensemble comportant un outil amovible d'accessoire rotatif de découpe d'aliments et un support de rangement comportant un noyau central et une zone de réception prévue pour le montage de l'outil amovible, du fait que le support de rangement est conforme à l'une au moins des caractéristiques précédentes, que l'ensemble comporte au moins un autre outil amovible d'accessoire rotatif de découpe d'aliments et que la ou chaque autre zone de réception du support de rangement est prévue pour le montage de l'autre ou de l'un des autres outils amovibles. Un ensemble particulièrement compact peut ainsi être obtenu. Avantageusement alors, les outils amovibles comportent des moyens de retenue élastiques prévus pour venir en prise avec le support de rangement lorsque les outils amovibles sont montés sur le support de rangement. Cette disposition facilite le montage des outils amovibles sur le support de rangement.

Selon une forme de réalisation avantageuse, les outils amovibles comprennent une pièce métallique portant au moins un organe de travail, les moyens de retenue élastiques étant issus de la pièce métallique.

Avantageusement alors, les outils amovibles comportent un corps d'outil en matière plastique surmoulé sur la pièce métallique.

Avantageusement encore, la zone de réception, respectivement la ou chaque autre zone de réception, présente une ouverture traversante, l'ouverture étant adjacente à une conformation de retenue du support de rangement prévue pour coopérer avec les moyens de retenue élastiques des outils amovibles. Cette disposition permet de favoriser le retrait des outils amovibles du support de rangement.

Selon une forme de réalisation, les conformations de retenue sont agencées sur la couronne périphérique. En complément ou en alternative, au moins l'une des conformations de retenue pourrait notamment être ménagée sur un des bras, ou sur une portion du noyau central s'étendant entre deux bras adjacents.

Avantageusement alors, les outils amovibles montés sur le support de rangement sont portés par une face de support de la couronne périphérique opposée aux conformations de retenue. Cette disposition offre une construction particulièrement simple et compacte.

Selon une forme de réalisation, les outils amovibles montés sur le support de rangement sont portés par le noyau central. En complément ou en alternative, au moins l'un des outils amovibles pourrait être porté par au moins une zone d'appui ménagée sur l'un des bras.

Avantageusement encore, la ou chaque autre zone de réception est prévue pour le montage de l'autre ou de l'un des autres outils amovibles lorsque l'un des outils amovibles est monté sur la zone de réception.

Avantageusement encore, les outils amovibles sont indépendants.

Ces objets sont atteints également avec un dispositif de découpe d'aliments comportant un corps principal présentant un organe d'entraînement s'étendant dans une enceinte de travail prévue pour loger un accessoire rotatif de découpe d'aliments monté sur l'organe d'entraînement, du fait qu'il comporte un support de rangement selon l'une au moins des caractéristiques précitées et que le support de rangement peut être monté dans l'enceinte de travail en remplacement de l'accessoire rotatif de découpe d'aliments. Cette disposition permet d'obtenir un dispositif de découpe d'aliments présentant une construction compacte.

Avantageusement alors, le logement axial du noyau central loge l'organe d'entraînement. Cette disposition permet d'améliorer encore la compacité du dispositif de découpe d'aliments.

Avantageusement alors, le logement axial est dépourvu de surface d'entraînement susceptible de venir en prise avec l'organe d'entraînement. Ainsi l'organe d'entraînement peut tourner dans le logement axial sans entraîner le noyau central. La structure du support de rangement n'a ainsi pas besoin d'être dimensionnée pour résister aux efforts exercés lors de la découpe des aliments. Cette disposition permet d'alléger la structure du support de rangement.

Selon une forme de réalisation, le corps principal loge un moteur électrique prévu pour entraîner en rotation l'organe d'entraînement. En alternative, le corps principal pourrait notamment être monté, si désiré amovible, sur un boîtier logeant un moteur électrique relié à une transmission prévue pour entraîner en rotation l'organe d'entraînement.

Avantageusement encore, l'accessoire rotatif de découpe d'aliments comprend un support de travail ainsi qu'un outil amovible.

Avantageusement alors, le support de travail comporte une surface d'appui présentant une ouverture prévue pour le montage de chacun des outils amovibles.

Avantageusement encore, le support de travail présente une forme de disque.

Avantageusement encore, l'enceinte de travail comprend un couvercle présentant une entrée d'aliments à découper.

Avantageusement alors, le couvercle est réalisé en matériau transparent.

L'invention sera mieux comprise à l'étude d'un exemple de réalisation, pris à titre nullement limitatif, illustré dans les figures annexées, dans lesquelles :
- la figure 1 est une vue en coupe longitudinale d'un appareil de découpe d'aliments formant un dispositif de découpe d'aliments selon l'invention,
- la figure 2 est une vue en perspective d'un corps principal présentant un organe d'entraînement, d'un réceptacle et d'un couvercle de l'appareil de découpe d'aliments illustré sur la figure 1,
- les figures 3a, 3b, 3c illustrent différents outils amovibles d'accessoire rotatif de découpe d'aliments,
- la figure 4 illustre un support de travail rotatif sur lequel peuvent être montés chacun des outils amovibles illustrés sur les figures 3a, 3b, 3c,
- la figure 5 est une vue de dessous du support de travail rotatif illustré sur la figure 4,
- la figure 6 montre l'outil amovible illustré sur la figure 3c monté sur le support de travail rotatif illustré sur les figures 4 et 5, pour former un accessoire rotatif de découpe d'aliments susceptible d'être mis en place sur l'organe d'entraînement illustré sur la figure 2,
- la figure 7 illustre un support de rangement prévu pour recevoir les outils amovibles d'accessoire rotatif de découpe d'aliments illustrés sur les figures 3a, 3b et 3c,
- la figure 8 montre le support de rangement d'outils illustré sur la figure 7, sur lequel sont montés les outils amovibles d'accessoire rotatif de découpe d'aliments illustrés sur les figures 3a, 3b et 3c,
- la figure 9 illustre le montage du support de rangement illustré sur les figures 7 et 8 et des outils amovibles d'accessoire rotatif de découpe d'aliments illustrés sur les figures 3a, 3b et 3c, sous le corps principal illustré sur les figures 1, 2 et 6.

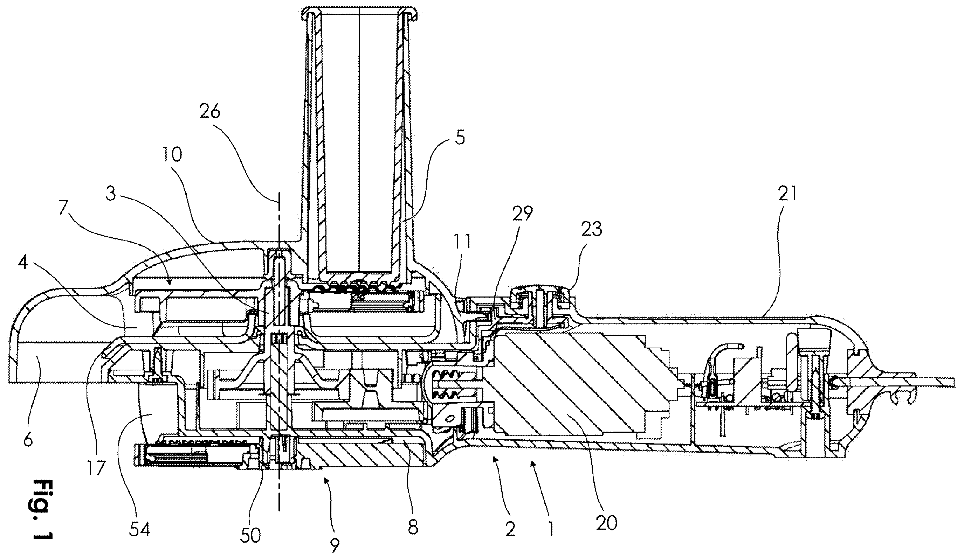

L'appareil électroménager de préparation culinaire illustré sur la figure 1 forme un dispositif de découpe d'aliments 1 comportant un corps principal 2 présentant un organe d'entraînement 3 s'étendant dans une enceinte de travail 4 prévue pour loger un accessoire rotatif de découpe d'aliments 7 monté sur l'organe d'entraînement 3. L'enceinte de travail 4 présente une entrée d'aliments à découper 5 débouchant en regard d'une surface de découpe de l'accessoire rotatif de découpe d'aliments 7 monté sur l'organe d'entraînement 3.

L'enceinte de travail 4 présente avantageusement une sortie d'aliments découpés 6. L'utilisateur peut ainsi recueillir les aliments découpés directement dans le récipient souhaité, par exemple un plat ou une assiette. Le dispositif de découpe d'aliments 1 peut ainsi être alimenté en continu par l'entrée d'aliments à découper 5. Tel que visible sur la figure 1, l'accessoire rotatif de découpe d'aliments 7 monté sur l'organe d'entraînement 3 est agencé dans l'enceinte de travail 4 entre l'entrée d'aliments à découper 5 et la sortie d'aliments découpés 6.

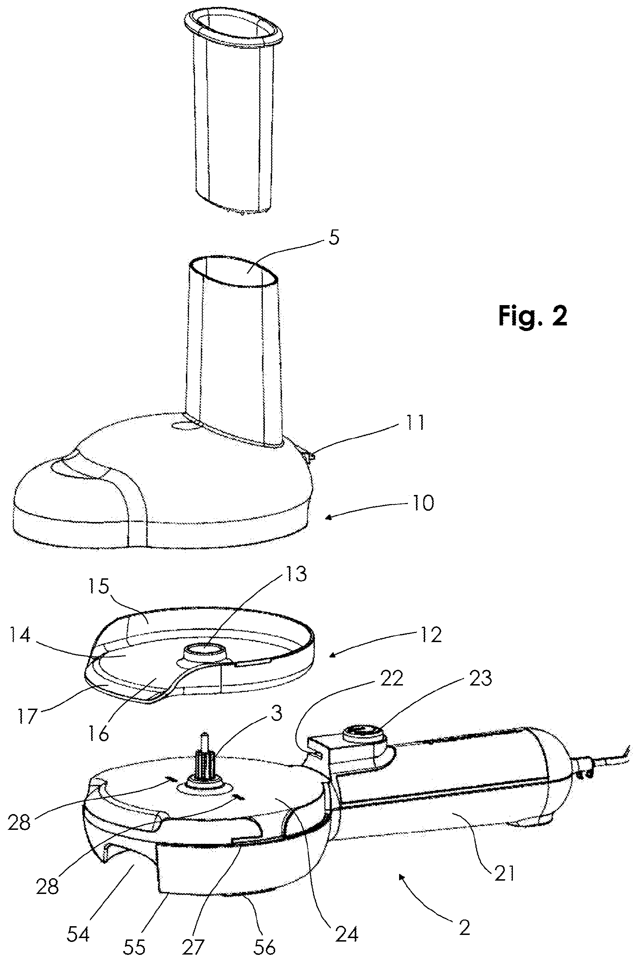

Dans l'exemple de réalisation illustré sur la figure 1, l'enceinte de travail 4 comprend un couvercle 10 présentant l'entrée d'aliments à découper 5. Le couvercle 10 est avantageusement réalisé en matériau transparent. Le couvercle 10 est verrouillé sur le corps principal 2. Tel que visible sur la figure 2, le corps principal 2 présente au moins une encoche 27 de verrouillage par baïonnette, prévue pour recevoir un ergot de verrouillage du couvercle 10 (non visible sur les figures). De préférence le corps principal 2 comporte deux encoches 27 opposées prévues chacune pour recevoir un ergot du couvercle 10.

Dans l'exemple de réalisation illustré sur les figures, l'enceinte de travail 4 comprend un réceptacle 12 monté sur le corps principal 2.

Tel que représenté sur la figure 2, le réceptacle 12 est avantageusement amovible par rapport au corps principal 2. Le réceptacle 12 est bloqué en rotation par rapport au corps principal 2. A cet effet le corps principal 2 présente deux logements 28 prévus pour recevoir chacun une protubérance inférieure (non visible sur les figures) du réceptacle 12. Le réceptacle 12 présente une cheminée centrale 13 prévue pour le passage de l'organe d'entraînement 3. Le réceptacle 12 délimite avec le couvercle 10 la sortie d'aliments découpés 6. Aussi le réceptacle 12 présente un fond 14 entouré par une bordure latérale 15 ménageant un passage latéral 16 prévu pour l'évacuation des aliments découpés. De préférence le fond 14 est prolongé par une paroi inclinée d'évacuation 17 s'étendant au dessus du corps principal 2, tel que visible sur la figure 1.

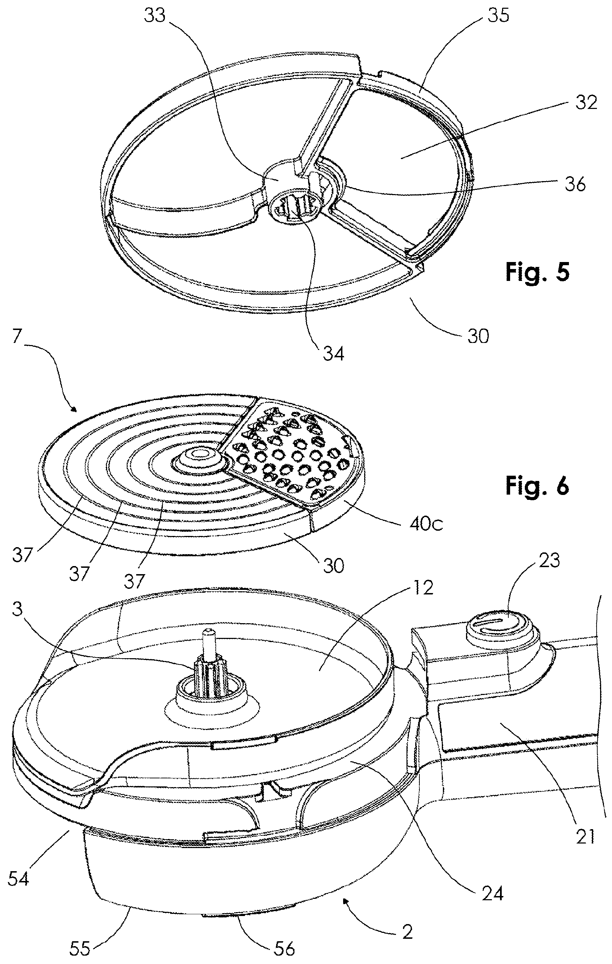

Par ailleurs, dans l'exemple de réalisation illustré sur la figure 1, le corps principal 2 loge un moteur électrique 20 prévu pour entraîner en rotation l'organe d'entraînement 3, par exemple par une transmission à engrenages. Le corps principal 2 présente une portion allongée 21 prévue pour être tenue à la main. La portion allongée 21 est adjacente à l'enceinte de travail 4. Le couvercle 10 présente un organe d'actionnement 11 prévu pour être engagé par rotation dans un logement latéral 22 du corps principal 2, tel que visible sur la figure 2. Le corps principal 2 porte un bouton de commande 23 prévu pour commander l'alimentation du moteur électrique 20. Lorsque le couvercle 10 est verrouillé sur le corps principal 2, l'organe d'actionnement 11 déverrouille une tige de commande 29 qui peut alors être poussée par le bouton de commande 23 pour actionner un interrupteur autorisant l'alimentation du moteur électrique 20. Le bouton de commande 23 est avantageusement agencé sur la portion allongée 21 du côté du couvercle 10, pour permettre un actionnement par le pouce de la main de l'utilisateur tenant le corps principal 2. Le corps principal 2 présente une portion circulaire 24 raccordée à la portion allongée 21. Le réceptacle 12 est monté amovible sur la partie supérieure de la portion circulaire 24, tel que représenté sur les figures 2 et 6.

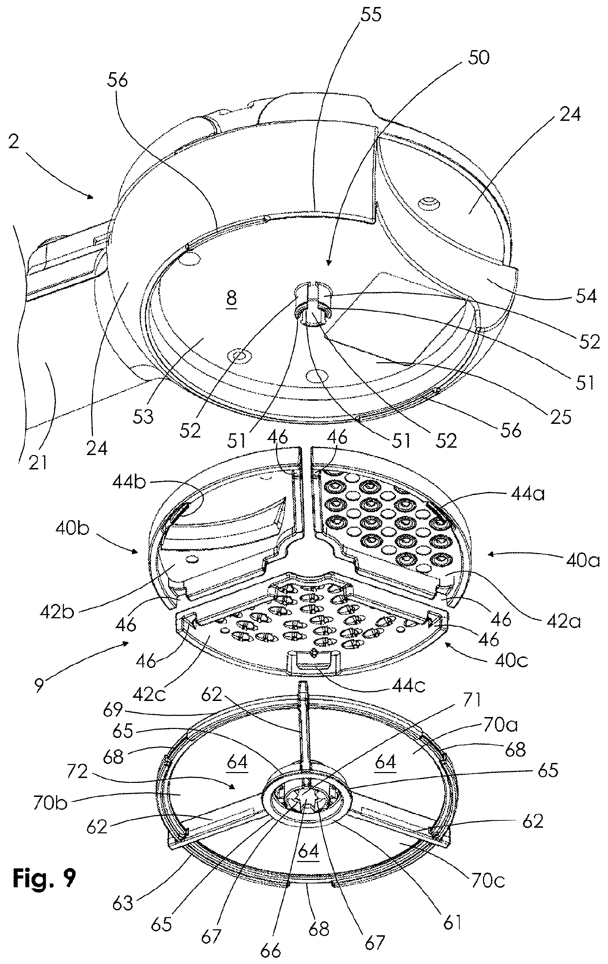

Tel que représenté sur la figure 1, le corps principal 2 présente un espace de rangement 8 prévu pour recevoir un autre accessoire de découpe d'aliments 9. L'espace de rangement comporte au moins un organe de retenue 50 prévu pour porter l'autre accessoire de découpe d'aliments 9. L'espace de rangement 8 est agencé sur une face 25 du corps principal 2 opposée à l'enceinte de travail 4. Ainsi la face 25 est une face inférieure du corps principal 2, visible sur la figure 9. Plus particulièrement, l'espace de rangement 8 est agencé dans la partie inférieure de la portion circulaire 24.

Dans l'exemple de réalisation illustré sur les figures, l'organe de retenue 50 comporte trois crochets de retenue 51 appartenant chacun à une languette élastique 52 issue de la face 25 du corps principal 2.

L'espace de rangement 8 présente une ouverture inférieure 53, bien visible sur la figure 9, prévue pour la mise en place de l'autre accessoire de découpe d'aliments 9 sur l'organe de retenue 50, tel que représenté sur la figure 1.

Dans l'exemple de réalisation illustré sur les figures, l'espace de rangement 8 présente une échancrure latérale 54 prévue pour la saisie de l'autre accessoire de découpe d'aliments 9 par ses deux faces opposées. Plus particulièrement, l'échancrure latérale 54 est ménagée dans la partie inférieure de la portion circulaire 24 du corps principal 2.

Dans l'exemple de réalisation illustré sur les figures, l'espace de rangement 8 présente une paroi latérale inférieure 55 entourant partiellement l'autre accessoire de découpe d'aliments 9 porté par l'organe de retenue 50.

La paroi latérale inférieure 55 peut être utilisée comme support d'appui pour poser le corps principal 2 sur un support plan tel qu'une table. A cet effet le corps principal 2 peut comporter au moins deux conformations d'appui 56 agencées sur la paroi latérale inférieure 55 de part et d'autre de la portion circulaire 24.

Tel que visible sur la figure 1, l'accessoire rotatif de découpe d'aliments 7 monté sur l'organe d'entraînement 3 et l'autre accessoire de découpe d'aliments 9 porté par l'organe de retenue 50 sont alignés selon un même axe 26.

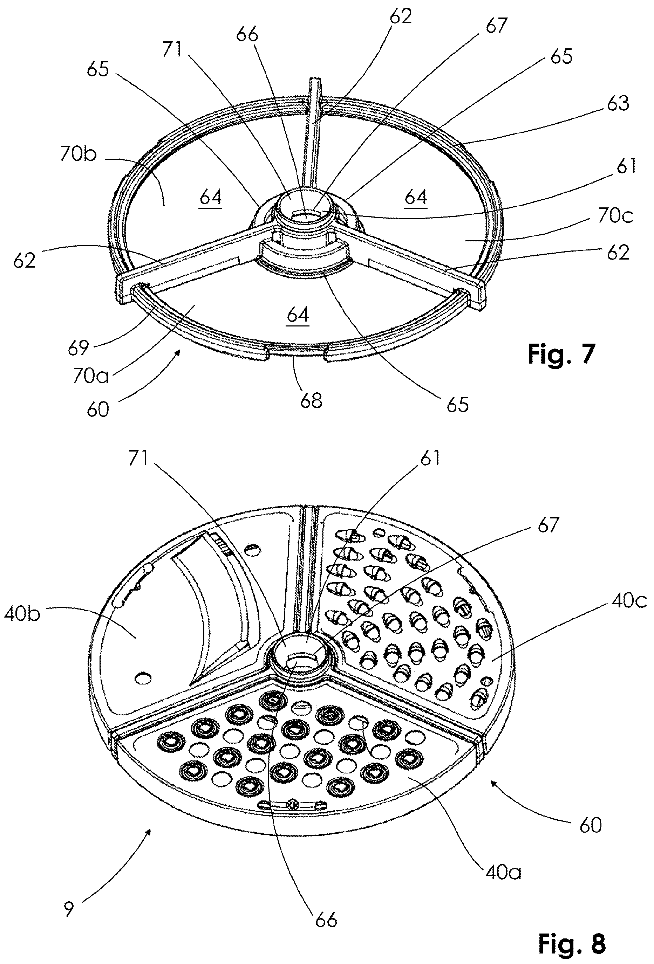

L'accessoire rotatif de découpe d'aliments 7 et l'autre accessoire de découpe d'aliments 9 présentent chacun deux faces opposées. De préférence l'accessoire rotatif de découpe d'aliments 7 et l'autre accessoire de découpe d'aliments 9 forment des disques, tel que représenté sur les figures 6 et 8.

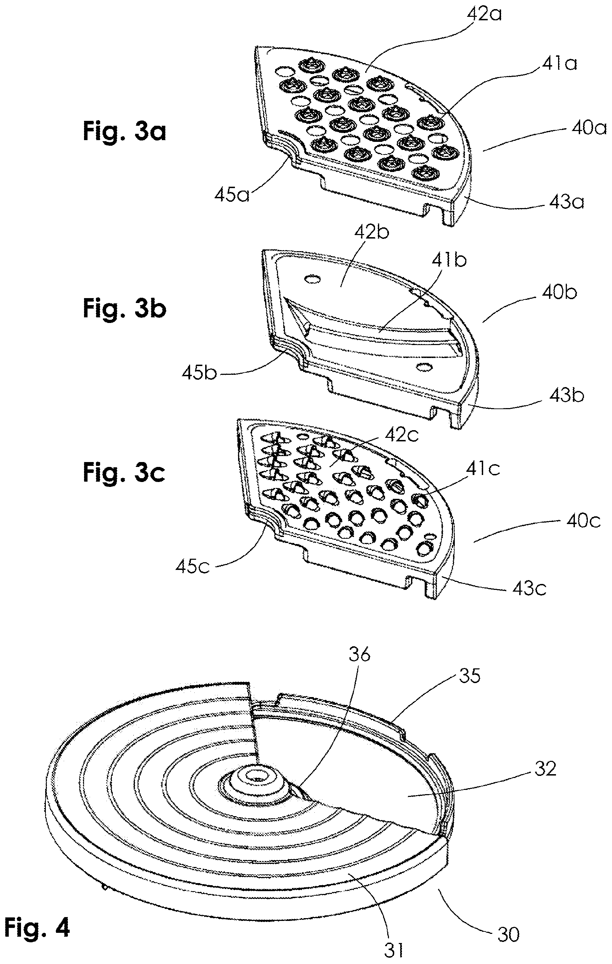

L'accessoire rotatif de découpe d'aliments 7 comprend un support de travail 30 illustré sur les figures 4, 5 et 6, ainsi qu'un outil amovible 40a, 40b ou 40c, illustré respectivement sur les figures 3a, 3b ou 3c.

Le support de travail 30 présente une forme de disque et comporte une surface d'appui 31 présentant une ouverture 32 prévue pour le montage de chacun des outils amovibles 40a, 40b, 40c.

L'ouverture 32 est adjacente à un moyeu central 33 portant un organe entraîneur 34 prévu pour venir en prise sur l'organe d'entraînement 3. L'ouverture 32 est délimitée par une portion de couronne périphérique 35.

Si désiré la surface d'appui 31 prévue pour porter et découper les aliments n'est pas nécessairement entièrement plane, et peut par exemple présenter des nervures concentriques 37.

Les outils amovibles 40a, 40b, 40c comportent au moins un organe de travail 41 a, 41 b, 41 c. Les outils amovibles 40a, 40b, 40c comprennent avantageusement une pièce métallique 42a ; 42b ; 42c portant au moins un organe de travail 41 a; 41 b; 41 c. Les outils amovibles 40a, 40b, 40c comportent avantageusement des moyens de retenue élastiques 44a, 44b, 44c, prévus pour venir en prise avec le support de travail 30.

Dans une forme de réalisation préférée illustrée sur les figures, les moyens de retenue élastiques 44a, 44b, 44c sont issus de la pièce métallique 42a, 42b , 42c, tel que mieux visible sur la figure 9. Les outils amovibles 40a, 40b, 40c comportent un corps d'outil 43a, 43b, 43c en matière plastique surmoulé sur la pièce métallique 42a, 42b, 42c. Le corps d'outil 43a, 43b, 43c forme un secteur radial présentant une encoche interne 45a, 45b, 45c prévue pour être engagée dans une nervure extérieure 36 présente sur le moyeu central 33 dans l'ouverture 32.

L'autre accessoire de découpe d'aliments 9 comprend un support de rangement 60 illustré sur les figures 7, 8 et 9, ainsi qu'au moins un des outils amovibles 40a, 40b, 40c, illustrés respectivement sur les figures 3a, 3b, 3c, et visibles également sur les figures 8 et 9.

Chacun des outils amovibles 40a, 40b, 40c peut être monté de manière interchangeable sur le support de travail 30 et sur le support de rangement 60.

Le support de rangement 60 comporte un noyau central 61, une zone de réception 70a, une autre zone de réception 70b et une troisième zone de réception 70c prévues chacune pour le montage d'un des outils amovibles 40a, 40b, 40c d'accessoire rotatif de découpe d'aliments 7.

Ainsi l'autre zone de réception 70b et la troisième zone de réception 70c sont chacunes prévues pour le montage d'un autre des outils amovibles 40b, 40c.

Les moyens de retenue élastiques 44a, 44b, 44c des outils amovibles 40a, 40b, 40c sont prévus pour venir en prise avec le support de rangement 60 lorsque les outils amovibles 40a, 40b, 40c sont montés sur le support de rangement 60.

Le support de rangement 60 présente une structure en forme de disque comportant une couronne périphérique 63 reliée au noyau central 61. Trois bras 62 relient la couronne périphérique 63 au noyau central 61. Ainsi la zone de réception 70a, l'autre zone de réception 70b, et la troisième zone de réception 70c sont chacune délimitées par deux des bras 62 adjacents. Les bras 62 sont régulièrement espacés autour du noyau central 61.

Les trois bras 62 délimitent avec la couronne périphérique 63 et le noyau central 61 trois ouvertures 64 de géométrie comparable à la géométrie de l'ouverture 32. Ainsi la zone de réception 70a, l'autre zone de réception 70b, et la troisième zone de réception 70c, présentent chacune une ouverture 64 traversante.

Tel que visible sur la figure 9, chacune des ouvertures 64 est adjacente à une conformation de retenue 68 du support de rangement 60 prévue pour coopérer avec les moyens de retenue élastiques 44a, 44b, 44c des outils amovibles 40a, 40b, 40c.

Dans l'exemple de réalisation illustré sur les figures, chacune des conformations de retenue 68 est agencée sur la couronne périphérique 63, entre deux bras 62 adjacents.

Les trois outils amovibles 40a, 40b, 40c peuvent être montés simultanément sur le support de rangement 60, tel que représenté sur la figure 8.

Par ailleurs, tel que bien visible sur les figures 3a, 3b, 3c, les outils amovibles 40a, 40b, 40c sont indépendants.

Ainsi l'autre zone de réception 70b et la troisième zone de réception 70c sont chacunes prévues pour le montage d'un autre des outils amovibles 40b, 40c lorsque l'un des outils amovibles 40a est monté sur la zone de réception 70a, tel que bien visible sur les figures 7 à 9.

Le noyau central 61 présente sur sa périphérie à l'intérieur de chacune des ouvertures 64 une nervure extérieure 65 prévue pour le montage de l'un des outils amovibles 40a, 40b, 40c. Les outils amovibles 40a, 40b, 40c montés sur le support de rangement 60 sont ainsi portés par le noyau central 61.

Par ailleurs les outils amovibles 40a, 40b, 40c montés sur le support de rangement 60 sont portés par la couronne périphérique 63. Plus particulièrement dans l'exemple de réalisation illustré sur les figures, les outils amovibles 40a, 40b, 40c comportent des encoches 46 prévues pour recevoir la couronne périphérique 63. Les outils amovibles 40a, 40b, 40c montés sur le support de rangement 60 sont portés par une face de support 69 de la couronne périphérique 63 opposée aux conformations de retenue 68, tel que visible sur les figures 7 et 9.

Le noyau central 61 présente un logement axial 66. Un organe d'accrochage 71 est agencé dans le logement axial 66. L'organe d'accrochage 71 est prévu pour coopérer avec l'organe de retenue 50. Tel que visible sur les figures 7, 8 et 9, l'organe d'accrochage 71 est formé par trois ergots de retenue internes 67. Ainsi l'organe d'accrochage 71 restreint la section libre du logement axial 66. Les ergots de retenue internes 67 sont prévus pour venir en prise avec les crochets de retenue 51 de l'organe de retenue 50, visibles sur la figure 9, lorsque le support de rangement 60 est monté sur l'organe de retenue 50.

Dans l'exemple de réalisation illustré sur les figures, le logement axial 66 du noyau central 61 loge l'organe d'entraînement 3. Le logement axial 66 permet ainsi le montage du support de rangement 60 sur l'organe d'entraînement 3. Ainsi le support de rangement 60 peut être monté dans l'enceinte de travail 4 en remplacement de l'accessoire rotatif de découpe d'aliments 7.

De préférence le logement axial 66 est dépourvu de surface d'entraînement susceptible de venir en prise avec l'organe d'entraînement 3. L'organe d'accrochage 71 est dimensionné pour laisser un passage libre à l'organe d'entraînement 3. Ainsi l'autre accessoire de découpe d'aliments 9 monté sur l'organe d'entraînement 3 n'est pas entraîné en rotation par l'organe d'entraînement 3.

Plus particulièrement, le logement axial 66 forme un passage traversant. Avantageusement, les ergots de retenue internes 67 sont agencés dans la partie centrale du logement axial 66, de sorte que le support de rangement 60 peut être monté sur l'organe de retenue 50 ou sur l'organe d'entraînement 3 dans un sens ou dans l'autre. Ainsi les trois outils amovibles 40a, 40b, 40c montés sur le support de rangement 60 en place dans l'enceinte de travail 4 peuvent être visibles par le couvercle 10 transparent.

Les nervures extérieures 65 peuvent également former un organe de préhension 72 facilitant la manipulation du support de rangement 60. Notamment, lorsque les outils amovibles 40a, 40b, 40c sont disposés entre le corps principal 2 et le support de rangement 60, tel que représenté sur la figure 9, l'organe de préhension 72 permet une mise en place et un retrait aisé du support de rangement 60.

Le fonctionnement de la présente invention est le suivant.

Chacun des outils amovibles 40a, 40b, 40c peut être monté de manière interchangeable sur le support de travail 30 et sur le support de rangement 60.

L'utilisateur peut monter les trois outils amovibles 40a, 40b, 40c sur le support de rangement 60, tel que représenté à la figure 8.

L'utilisateur peut retirer du support de rangement 60 les outils amovibles 40a, 40b, 40c en déplaçant les moyens de retenue élastiques 44a, 44b, 44c.

Pour utiliser le dispositif de découpe d'aliments 1, l'utilisateur sélectionne l'un des outils amovibles 40a, 40b, 40c et le monte sur le support de travail 30 pour mettre en place l'accessoire rotatif de découpe d'aliments 7 dans l'enceinte de travail 4. L'utilisateur peut ranger l'autre accessoire de découpe d'aliments 9 comportant le support de rangement 60 portant les deux autres outils amovibles 40a, 40b, 40c dans l'espace de rangement 8.

Par ailleurs le logement axial 66 du noyau central 61 formant un passage traversant permet le montage du support de rangement 60 sur l'organe d'entraînement 3 à l'intérieur de l'enceinte de travail 4. Ainsi l'autre accessoire de découpe d'aliments 9 peut être monté sur l'organe d'entraînement 3 à la place de l'accessoire rotatif de découpe d'aliments 7. L'absence de dispositif d'entraînement en rotation sur le noyau central 61 du support de rangement 60 permet d'envisager une structure beaucoup plus légère pour ledit support de rangement 60.

L'ensemble comportant le support de rangement 60, un des outils amovibles 40a, 40b, 40c et au moins un autre des outils amovibles 40a, 40b, 40c d'accessoire rotatif de découpe d'aliments 7 présente ainsi une configuration particulièrement compacte.

Le support de rangement 60, l'autre accessoire de découpe d'aliments 9 et le dispositif de découpe d'aliments 1 comportant le support de rangement 60 présentent un encombrement réduit tout en permettant une utilisation conviviale.

A titre de variante, la zone de réception 70a, l'autre zone de réception 70b, et la troisième zone de réception 70c, ne présentent pas nécessairement chacune une ouverture 64 traversante. Le support de rangement 60 peut notamment présenter une paroi s'étendant autour et à partir du noyau central 61.

A titre de variante, le noyau central 61 peut présenter au moins un ergot de retenue interne 67 restreignant la section libre du logement axial 66.

A titre de variante, l'organe d'accrochage 71 ne comporte pas nécessairement au moins un ergot de retenue interne 67 agencé à l'intérieur du logement axial 66. L'organe d'accrochage 71 peut par exemple être formé par une nervure annulaire agencée à l'intérieur ou en bordure du logement axial 66.

A titre de variante, les outils amovibles 40a, 40b, 40c montés sur le support de rangement 60 ne sont pas nécessairement portés par le noyau central 61 et par la couronne périphérique 63. En complément ou en alternative, au moins l'un des outils amovibles 40a, 40b, 40c monté sur le support de rangement 60 pourrait notamment être porté par au moins une zone d'appui ménagée sur l'un des bras 62.

A titre de variante, les conformations de retenue 68 ne sont pas nécessairement agencées sur la couronne périphérique 63. Notamment au moins l'une des conformations de retenue 68 pourrait être ménagée sur un des bras 62, ou sur une portion du noyau central 61 s'étendant entre deux bras 62 adjacents.

A titre de variante, la couronne périphérique 63 peut être reliée au noyau central 61 par au moins deux bras 62.

A titre de variante, le support de rangement 60 peut comporter alors seulement une zone de réception 70a d'un outil amovible et une autre zone de réception 70b d'un autre outil amovible, la zone de réception 70a et l'autre zone de réception 70b s'étendant chacune autour du noyau central 61 selon un angle présentant une ouverture axiale inférieure à 180°.

A titre de variante, le support de rangement 60 peut comporter une zone de réception 70a d'un outil amovible et plus de deux autres zones de réception d'un outil amovible. Le support de rangement 60 peut ainsi comporter une quatrième, voire une cinquième, et même une sixième zone de réception d'outil amovible, les zones de réception s'étendant alors chacune autour du noyau central 61 selon un angle présentant une ouverture axiale inférieure à 90°, respectivement inférieure à 75° ou à 60°.

Ainsi la ou chaque autre zone de réception est prévue pour le montage de l'autre ou de l'un des autres outils amovibles lorsque l'un des outils amovibles est monté sur la zone de réception.

Le support de rangement comporte ainsi avantageusement entre deux et six bras 62, et de préférence trois ou quatre bras 62.

A titre de variante, l'accessoire rotatif de découpe d'aliments 7 et l'autre accessoire de découpe d'aliments 9 ne présentent pas nécessairement une forme de disque et peuvent notamment être concaves ou convexes, de préférence avec un angle inférieur ou égal à 30° par rapport au plan perpendiculaire à l'axe 26. La géométrie et les dimensions de l'enceinte de travail 4 et de l'espace de rangement 8 sont alors adaptées en conséquence.

A titre de variante, l'espace de rangement 8 peut comporter au moins un organe de retenue 50 prévu pour porter l'autre accessoire de découpe d'aliments 9, le ou les organes de retenue 50 n'étant pas nécessairement agencés en position centrale par rapport à l'axe 26.

A titre de variante, l'organe de retenue 50 peut comporter au moins un crochet de retenue 51, toutefois le ou les crochets de retenue ne sont pas nécessairement issus d'une languette élastique. Notamment, le ou au moins l'un des crochets de retenue peut être monté mobile contre un élément de rappel élastique.

A titre de variante, l'organe de retenue 50 ne comporte pas nécessairement au moins un crochet de retenue. Notamment, l'organe de retenue peut être formé par au moins une paroi inférieure de support ménageant un accès latéral à l'espace de rangement.

A titre de variante, l'espace de rangement 8 ne présente pas nécessairement une ouverture inférieure prévue pour la mise en place de l'autre accessoire de découpe d'aliments sur l'organe de retenue. Notamment, l'espace de rangement peut présenter une ouverture latérale, l'organe de retenue pouvant être alors formé par une paroi inférieure de support délimitant l'espace de rangement.

A titre de variante, le corps principal 2 ne loge pas nécessairement un moteur électrique prévu pour entraîner en rotation l'organe d'entraînement. Notamment, le corps principal pourrait être monté, si désiré amovible, sur un boîtier logeant un moteur électrique relié à une transmission prévue pour entraîner en rotation l'organe d'entraînement.

A titre de variante l'enceinte de travail 4 ne comporte pas nécessairement une sortie d'aliments découpés 6.

A titre de variante, l'enceinte de travail 4 peut comporter au moins une autre sortie d'aliments découpés.

A titre de variante, l'enceinte de travail 4 peut comporter au moins une autre entrée d'aliments à découper.

La présente invention n'est nullement limitée à l'exemple de réalisation décrit et à ses variantes, mais englobe de nombreuses modifications dans le cadre des revendications.

## Revendications

1. Dispositif de découpe d'aliments (1) comportant un support de travail (30), des outils amovibles (40a, 40b, 40c), un corps principal (2) présentant un organe d'entraînement (3) s'étendant dans une enceinte de travail (4) prévue pour loger un accessoire rotatif de découpe d'aliments (7) monté sur l'organe d'entraînement (3), l'accessoire rotatif de découpe d'aliments (7) comportant le support de travail (30) ainsi que l'un des outils amovibles (40a, 40b, 40c), chacun des outils amovibles (40a, 40b, 40c) pouvant être monté de manière interchangeable sur le support de travail (30), **caractérisé en ce qu'**il comporte un support de rangement (60) comportant un noyau central (61) et une zone de réception (70a) prévue pour le montage de l'un des outils amovibles (40a, 40b, 40c), dans lequel la zone de réception (70a) s'étend autour du noyau central (61) selon un angle présentant une ouverture axiale inférieure à 180°, **en ce que** le support de rangement (60) comporte au moins une autre zone de réception (70b ; 70c) prévue pour le montage d'un autre des outils amovibles (40a, 40b, 40c), la ou chaque autre zone de réception (70b ; 70c) s'étendant autour du noyau central (61) selon un angle présentant une ouverture axiale inférieure à 180°, et **en ce que** le support de rangement (60) peut être monté dans l'enceinte de travail (4) en remplacement de l'accessoire rotatif de découpe d'aliments (7).

2. Dispositif de découpe d'aliments (1) selon la revendication 1, **caractérisé en ce que** le noyau central (61) présente un logement axial (66).

3. Dispositif de découpe d'aliments (1) selon la revendication 2, **caractérisé en ce qu'**un organe d'accrochage (71) est agencé dans le logement axial (66).

4. Dispositif de découpe d'aliments (1) selon l'une des revendications 2 à 3, **caractérisé en ce que** le logement axial (66) forme un passage traversant.

5. Dispositif de découpe d'aliments (1) selon l'une des revendications 2 à 4, **caractérisé en ce que** le logement axial (66) du noyau central (61) loge l'organe d'entraînement (3) et **en ce que** le logement axial (66) est dépourvu de surface d'entraînement susceptible de venir en prise avec l'organe d'entraînement (3).

6. Dispositif de découpe d'aliments (1) selon l'une des revendications 1 à 5, **caractérisé en ce que** le support de rangement (60) présente une structure en forme de disque comportant une couronne périphérique (63) reliée au noyau central (61).

7. Dispositif de découpe d'aliments (1) selon la revendication 6, **caractérisé en ce que** la couronne périphérique (63) est reliée au noyau central (61) par au moins deux bras (62), la zone de réception (70a) et la ou chaque autre zone de réception (70b ; 70c) étant chacune délimitées par deux des bras (62) adjacents.

8. Dispositif de découpe d'aliments (1) selon la revendication 7, **caractérisé en ce qu'**il comporte entre deux et six bras (62), et de préférence trois ou quatre bras (62).

9. Dispositif de découpe d'aliments (1) selon l'une des revendications 1 à 8, **caractérisé en ce que** les outils amovibles (40a, 40b, 40c) comportent des moyens de retenue élastiques (44a, 44b, 44c) prévus pour venir en prise avec le support de rangement (60) lorsque les outils amovibles (40a, 40b, 44c) sont montés sur le support de rangement (60).

10. Dispositif de découpe d'aliments (1) selon la revendication 9, **caractérisé en ce que** les outils amovibles (40a, 40b, 40c) comprennent une pièce métallique (42a ; 42b ; 42c) portant au moins un organe de travail (41a, 41 b, 41c) et **en ce que** les moyens de retenue élastiques (44a, 44b, 44c) sont issus de la pièce métallique (42a, 42b, 42c).

11. Dispositif de découpe d'aliments (1) selon l'une des revendications 1 à 10, **caractérisé en ce que** la zone de réception (70a), respectivement la ou chaque autre zone de réception (70b ; 70c), présente une ouverture (64) traversante, l'ouverture (64) étant adjacente à une conformation de retenue (68) du support de rangement (60) prévue pour coopérer avec les moyens de retenue élastiques (44a, 44b, 44c) des outils amovibles (40a, 40b, 40c).

12. Dispositif de découpe d'aliments (1) selon la revendication 11 et selon l'une des revendications 6 à 8, **caractérisé en ce que** les conformations de retenue (68) sont agencées sur la couronne périphérique (63).

13. Dispositif de découpe d'aliments (1) selon la revendication 12, **caractérisé en ce que** les outils amovibles (40a, 40b, 40c) montés sur le support de rangement (60) sont portés par une face de support (69) de la couronne périphérique (63) opposée aux conformations de retenue (68).

14. Dispositif de découpe d'aliments (1) selon l'une des revendications 1 à 13, **caractérisé en ce que** les outils amovibles (40a, 40b, 40c) montés sur le support de rangement (60) sont portés par le noyau central (61).

15. Dispositif de découpe d'aliments (1) selon l'une des revendications 1 à 14, **caractérisé en ce que** la ou chaque autre zone de réception (70b ; 70c) est prévue pour le montage de l'autre ou de l'un des autres outils amovibles (40a, 40b, 40c) lorsque l'un des outils amovibles (40a, 40b, 40c) est monté sur la zone de réception (70a).

16. Dispositif de découpe d'aliments (1) selon l'une des revendications 1 à 15, **caractérisé en ce que** les outils amovibles (40a, 40b, 40c) sont indépendants.

17. Dispositif de découpe d'aliments (1) selon l'une des revendications 1 à 16, **caractérisé en ce que** le corps principal (2) loge un moteur électrique (20) prévu pour entraîner en rotation l'organe d'entraînement (3).

18. Dispositif de découpe d'aliments (1) selon l'une des revendications 1 à 17 **caractérisé en ce que** l'enceinte de travail (4) comprend un couvercle (10) présentant une entrée d'aliments à découper (5).

## Patentansprüche

1. Gerät (1) zum Zerkleinern von Lebensmitteln mit einer Arbeitshalterung (30), abnehmbaren Werkzeugen (40a, 40b, 40c) und einem Hauptkörper (2), der ein Antriebselement (3) aufweist, das in einen Arbeitsraum (4) ragt, der für die Aufnahme eines rotierenden Zubehörteils (7) zum Zerkleinern von Lebensmitteln vorgesehen ist, das auf das Antriebselement (3) montiert ist, wobei das rotierende Zubehörteil (7) zum Zerkleinern von Lebensmitteln die Arbeitshalterung (30) sowie eines der abnehmbaren Werkzeuge (40a, 40b, 40c) umfasst, wobei jedes der abnehmbaren Werkzeuge (40a, 40b, 40c) auswechselbar an die Arbeitshalterung (30) montiert werden kann, **dadurch gekennzeichnet, dass** es eine Lagerungshalterung (60) mit einem zentralen Kernstück (61) und einen Aufnahmebereich (70a) umfasst, der für die Montage eines der abnehmbaren Werkzeuge (40a, 40b, 40c) vorgesehen ist, wobei sich der Aufnahmebereich (70a) um das zentrale Kernstück (61) in einem Winkel erstreckt, der eine axiale Öffnung unter 180° aufweist, dass die Lagerungshalterung (60) zumindest einen weiteren Aufnahmebereich (70b; 70c) umfasst, der für die Montage eines weiteren der abnehmbaren Werkzeuge (40a, 40b, 40c) vorgesehen ist, wobei sich der oder jeder weitere Aufnahmebereich (70b; 70c) um das zentrale Kernstück (61) in einem Winkel erstreckt, der eine axiale Öffnung unter 180° aufweist, und dass die Lagerungshalterung (60) als Ersatz für das rotierende Zubehörteil (7) zum Zerkleinern von Lebensmitteln in dem Arbeitsraum (4) montiert werden kann.

2. Gerät (1) zum Zerkleinern von Lebensmitteln nach Anspruch 1, **dadurch gekennzeichnet, dass** das zentrale Kernstück (61) eine axiale Aufnahme (66) aufweist.

3. Gerät (1) zum Zerkleinern von Lebensmitteln nach Anspruch 2, **dadurch gekennzeichnet, dass** in der axialen Aufnahme (66) ein Einrastelement (71) angeordnet ist.

4. Gerät (1) zum Zerkleinern von Lebensmitteln nach einem der Ansprüche 2 bis 3, **dadurch gekennzeichnet, dass** die axiale Aufnahme (66) eine durchgehende Öffnung bildet.

5. Gerät (1) zum Zerkleinern von Lebensmitteln nach einem der Ansprüche 2 bis 4, **dadurch gekennzeichnet, dass** die axiale Aufnahme (66) des zentralen Kernstücks (61) das Antriebselement (3) aufnimmt und dass die axiale Aufnahme (66) keine Antriebsfläche aufweist, die mit dem Antriebselement (3) in Eingriff kommen könnte.

6. Gerät (1) zum Zerkleinern von Lebensmitteln nach einem der Ansprüche 1 bis 5, **dadurch gekennzeichnet, dass** die Lagerungshalterung (60) einen scheibenförmigen Aufbau aufweist, der einen umlaufenden Kranz (63) umfasst, der mit dem zentralen Kernstück (61) verbunden ist.

7. Gerät (1) zum Zerkleinern von Lebensmitteln nach Anspruch 6, **dadurch gekennzeichnet, dass** der umlaufende Kranz (63) durch zumindest zwei Schenkel (62) mit dem zentralen Kernstück (61) verbunden ist, wobei der Aufnahmebereich (70a) und der oder jeder weitere Aufnahmebereich (70b; 70c) jeweils durch zwei der benachbarten Schenkel (62) begrenzt werden.

8. Gerät (1) zum Zerkleinern von Lebensmitteln nach Anspruch 7, **dadurch gekennzeichnet, dass** es zwischen zwei und sechs Schenkel (62) und vorzugsweise drei oder vier Schenkel (62) umfasst.

9. Gerät (1) zum Zerkleinern von Lebensmitteln nach einem der Ansprüche 1 bis 8, **dadurch gekennzeichnet, dass** die abnehmbaren Werkzeuge (40a, 40b, 40c) elastische Rückhaltemittel (44a, 44b, 44c) umfassen, die dafür vorgesehen sind, mit der Lagerungshalterung (60) in Eingriff zu kommen, wenn die abnehmbaren Werkzeuge (40a, 40b, 44c) an der Lagerungshalterung (60) montiert sind.

10. Gerät (1) zum Zerkleinern von Lebensmitteln nach Anspruch 9, **dadurch gekennzeichnet, dass** die abnehmbaren Werkzeuge (40a, 40b, 40c) ein Metallteil (42a; 42b; 42c) umfassen, das zumindest ein Arbeitselement (41 a, 41 b, 41 c) umfasst, und dass die elastischen Rückhaltemittel (44a, 44b, 44c) aus dem Metallteil (42a, 42b, 42c) hervorgehen.

11. Gerät (1) zum Zerkleinern von Lebensmitteln nach einem der Ansprüche 1 bis 10, **dadurch gekennzeichnet, dass** der Aufnahmebereich (70a) bzw. der oder jeder weitere Aufnahmebereich (70b; 70c) eine durchgehende Öffnung (64) aufweist, wobei die Öffnung (64) an eine Rückhaltestruktur (68) der Lagerungshalterung (60) angrenzt, die dafür vorgesehen ist, mit den elastischen Rückhaltemitteln (44a, 44b, 44c) der abnehmbaren Werkzeuge (40a, 40b, 40c) zusammenzuwirken.

12. Gerät (1) zum Zerkleinern von Lebensmitteln nach Anspruch 11 und einem der Ansprüche 6 bis 8, **dadurch gekennzeichnet, dass** die Rückhaltestrukturen (68) an dem umlaufenden Kranz (63) angeordnet sind.

13. Gerät (1) zum Zerkleinern von Lebensmitteln nach Anspruch 12, **dadurch gekennzeichnet, dass** die an die Lagerungshalterung (60) montierten abnehmbaren Werkzeuge (40a, 40b, 40c) von einer Stützfläche (69) des umlaufenden Kranzes (63) getragen werden, die den Rückhaltestrukturen (68) gegenüberliegt.

14. Gerät (1) zum Zerkleinern von Lebensmitteln nach einem der Ansprüche 1 bis 13, **dadurch gekennzeichnet, dass** die an die Lagerungshalterung (60) montierten abnehmbaren Werkzeuge (40a, 40b, 40c) von dem zentralen Kernstück (61) getragen werden.

15. Gerät (1) zum Zerkleinern von Lebensmitteln nach einem der Ansprüche 1 bis 14, **dadurch gekennzeichnet, dass** der oder jeder weitere Aufnahmebereich (70b; 70c) für die Montage des weiteren oder eines der weiteren abnehmbaren Werkzeuge (40a, 40b, 40c) vorgesehen ist, wenn eines der abnehmbaren Werkzeuge (40a, 40b, 40c) in dem Aufnahmebereich (70a) montiert ist.

16. Gerät (1) zum Zerkleinern von Lebensmitteln nach einem der Ansprüche 1 bis 15, **dadurch gekennzeichnet, dass** die abnehmbaren Werkzeuge (40a, 40b, 40c) unabhängig sind.

17. Gerät (1) zum Zerkleinern von Lebensmitteln nach einem der Ansprüche 1 bis 16, **dadurch gekennzeichnet, dass** in dem Hauptkörper (2) ein Elektromotor (20) untergebracht ist, der dafür vorgesehen ist, das Antriebselement (3) in Drehung zu versetzen.

18. Gerät (1) zum Zerkleinern von Lebensmitteln nach einem der Ansprüche 1 bis 17, **dadurch gekennzeichnet, dass** der Arbeitsraum (4) einen Deckel (10) umfasst, der eine Einfüllöffnung (5) für zu zerkleinernde Lebensmittel aufweist.

## Claims

1. Appliance for cutting food (1) comprising a work support (30), removable tools (40a, 40b, 40c), a main body (2) having a drive member (3) extending in a working chamber (4) provided to accommodate a rotary accessory for cutting food (7) mounted on the drive member (3), the rotary accessory for cutting food (7) comprising the work support (30) as well as one of the removable tools (40a, 40b, 40c), each of the removable tools (40a, 40b, 40c) being mountable interchangeably on the work support (30), **characterised in that** it comprises a storage support (60) having a central core (61) and a receiving area (70a) provided to mount one of the removable tools (40a, 40b, 40c), wherein the receiving area (70a) extends around the central core (61) at an angle having an axial opening of less than 180°, **in that** the storage support (60) comprises at least one other receiving area (70b; 70c) provided to mount another of the removable tools (40a, 40b, 40c), the or each other receiving area (70b; 70c) extending around the central core (61) at an angle having an axial opening of less than 180°, and **in that** the storage support (60) can be mounted in the working chamber (4) to replace the rotary accessory for cutting food (7).

2. Appliance for cutting food (1) according to claim 1, **characterised in that** the central core (61) has an axial housing (66).

3. Appliance for cutting food (1) according to claim 2, **characterised in that** a hooking member (71) is arranged in the axial housing (66).

4. Appliance for cutting food (1) according to claim 2 or 3, **characterised in that** the axial housing (66) forms a through passage.

5. Appliance for cutting food (1) according to one of claims 2 to 4, **characterised in that** the axial housing (66) of the central core (61) accommodates the drive member (3) and **in that** the axial housing (66) has no drive surface likely to be caught by the drive member (3).

6. Appliance for cutting food (1) according to one of claims 1 to 5, **characterised in that** the storage support (60) has a disc-shaped structure comprising a peripheral ring (63) connected to the central core (61).

7. Appliance for cutting food (1) according to claim 6, **characterised in that** the peripheral ring (63) is connected to the central core (61) by at least two arms (62), the receiving area (70a) and the or each other receiving area (70b; 70c) each being defined by two of the adjacent arms (62).

8. Appliance for cutting food (1) according to claim 7, **characterised in that** it comprises between two and six arms (62), and preferably three or four arms (62).

9. Appliance for cutting food (1) according to one of claims 1 to 8, **characterised in that** the removable tools (40a, 40b, 40c) comprise elastic retaining means (44a, 44b, 44c) provided to engage with the storage support (60) when the removable tools (40a, 40b, 44c) are mounted on the storage support (60).

10. Appliance for cutting food (1) according to claim 9, **characterised in that** the removable tools (40a, 40b, 40c) comprise a metallic part (42a; 42b; 42c) carrying at least one working member (41 a, 41 b, 41c) and **in that** the elastic retaining means (44a, 44b, 44c) come from the metallic part (42a, 42b, 42c).

11. Appliance for cutting food (1) according to one of claims 1 to 10, **characterised in that** the receiving area (70a), respectively the or each other receiving area (70b; 70c) has a through opening (64), the opening (64) being adjacent to a retaining conformation (68) of the storage support (60) provided to cooperate with the elastic retaining means (44a, 44b, 44c) of the removable tools (40a, 40b, 40c).

12. Appliance for cutting food (1) according to claim 11 and according to one of claims 6 to 8, **characterised in that** the retaining conformations (68) are arranged on the peripheral ring (63).

13. Appliance for cutting food (1) according to claim 12, **characterised in that** the removable tools (40a, 40b, 40c) mounted on the storage support (60) are carried by a support face (69) of the peripheral ring (63) opposite the retaining conformations (68).

14. Appliance for cutting food (1) according to one of claims 1 to 13, **characterised in that** the removable tools (40a, 40b, 40c) mounted on the storage support (60) are carried by the central core (61).

15. Appliance for cutting food (1) according to one of claims 1 to 14, **characterised in that** the or each other receiving area (70b; 70c) is provided for mounting the other or one of the other removable tools (40a, 40b, 40c) when one of the removable tools (40a, 40b, 40c) is mounted on the receiving area (70a).

16. Appliance for cutting food (1) according to one of claims 1 to 15, **characterised in that** the removable tools (40a, 40b, 40c) are independent.

17. Appliance for cutting food (1) according to one of claims 1 to 16, **characterised in that** the main body (2) accommodates an electric motor (20) intended to rotate the drive member (3).

18. Appliance for cutting food (1) according to one of the claims 1 to 17, **characterised in that** the working chamber (4) comprises a lid (10) with an entry for the food to be cut (5).
